Europäisches Patentamt

**European Patent Office**

**Office européen des brevets**

(19)

(11) Numéro de publication: **0 025 522**
A1

(12)

# DEMANDE DE BREVET EUROPEEN

(21) Numéro de dépôt: 80104942.0

(51) Int. Cl.³: **B 65 G 65/28**

(22) Date de dépôt: 20.08.80

(30) Priorité: 18.09.79 FR 7923254

(43) Date de publication de la demande: 25.03.81
Bulletin 81/12

(84) Etats contractants désignés: **AT BE DE GB IT NL**

(71) Demandeur: **Société nouvelle des Etablissements A. Maguin Société anonyme dite:, Charmes, F-02800 La Fere (FR)**

(72) Inventeur: **Parent, Francis, Charmes F-02800 La Fere (FR)**

(74) Mandataire: **BUREAU D.A. CASALONGA, Lilienstrasse 77, D-8000 München 80 (DE)**

(54) Installation de stockage et de reprise automatique de betteraves, tubercules ou autres produits en vrac.

(57) Installation de stockage et de reprise automatique de betteraves, tubercules ou autres produits en vrac.

L'aire de stockage circulaire présente une surface conique dont le fond est occupé par un puits d'évacuation 2. Les caniveaux d'évacuation 20 sont disposés de manière sensiblement radiale et pénètrent tangentiellement dans le puits d'évacuation 2. Le pont d'abattage radial 16 comporte des lances de projection 17a, 17b, 17c qui sont animées d'un mouvement de balancier et projettent de l'eau vers l'avant. Les produits en vrac stockés 15 sont ainsi déplacés par le jet d'eau et évacués dans l'écoulement par les canaux d'évacuation 20 dont les portions basses ont été préalablement dégagées par la lance 17a.

Application au stockage et à la reprise des betteraves.

1    0025522

Installation de stockage et de reprise automatique de betteraves, tubercules ou autres produits en vrac.

La présente invention a pour objet une installation
permettant le stockage et la reprise en continu de manière
automatique d'un stock de produits en vrac et notamment de
betteraves, tubercules, minerai, charbon ou autres produits.

On connaît déjà, notamment pour le stockage temporaire
des betteraves ou autres tubercules, des installations de
stockage, comportant une aire de stockage dont la surface est
étanche à l'eau et qui présente une forme circulaire ou une
forme analogue à celle d'un hippodrome, c'est-à-dire comportant une portion centrale rectangulaire limitée de chaque côté
par deux portions d'extrémité semi-circulaires. De telles
aires de stockage comportent des moyens automatiques d'amenée
des betteraves ou autres produits en vrac, par exemple au
moyen de transporteurs à courroies sans fin, qui sont susceptibles de se déplacer selon un parcours cyclique au-dessus de
l'aire de stockage de façon à alimenter continuellement cette
dernière en produits à stocker tels que des betteraves. Dans
le cas d'une aire de stockage circulaire, le transporteur
d'alimentation est animé d'un mouvement de rotation au-dessus
de l'aire de stockage en étant soutenu à la fois par l'axe
central de l'aire de stockage et sur un rail de guidage ou
dispositif analogue se trouvant à la périphérie de ladite aire
de stockage.

Un moyen de reprise automatique des produits en vrac est
également prévu dans des installations de ce type, ce moyen
pouvant se déplacer selon le même parcours cyclique que les
moyens d'amenée des produits en vrac. Le moyen de reprise est
donc animé d'un mouvement de poursuite des moyens d'amenée de
sorte que la capacité de l'aire de stockage est constituée à
chaque instant par la capacité de l'aire de stockage comprise
entre les moyens d'amenée et les moyens de reprise. De cette
manière l'alimentation de l'aire de stockage peut ne pas être
continue, et se faire au contraire de manière sporadique dans
la mesure où les moyens de reprise disposent toujours d'une
certaine quantité de produits stockés qui peuvent être repris.
De la même manière, il est possible d'augmenter temporairement

0025522

le débit en produits en vrac alimentés grâce au caractère extensible de la capacité de stockage.

Dans des installations de ce type particulièrement adaptées au stockage des betteraves ou autre tubercules analogues, la reprise du stockage est réalisée au moyen de lances de pulvérisation d'eau sous pression qui entraînent les betteraves dans un écoulement liquide en direction de caniveaux d'évacuation qui sont disposés selon une direction sensiblement périphérique. Dans le cas d'une aire de stockage circulaire, ces caniveaux sont également circulaires, l'aire de stockage comportant plusieurs secteurs circulaires à surfaces inclinées, la zone la plus basse située dans le fond de chacun de ces secteurs circulaires comportant un caniveau d'évacuation. Pour éviter que les betteraves stockées dans une telle installation n'obturent les caniveaux d'évacuation permettant la reprise, ces caniveaux sont en outre équipés de dispositifs de protection en forme de toit qui empêchent les betteraves stockées de tomber dans ces caniveaux et autorisent ainsi l'évacuation des betteraves par écoulement d'eau.

Une telle disposition présente des inconvénients pratiques considérables. Tout d'abord la réalisation de ces toits de protection augmente de manière sensible le prix de revient de telles installations de stockage. Par ailleurs il reste malgré tout nécessaire de prévoir des canalisations d'alimentation en eau supplémentaire pour dégager des canaux d'évacuation certaines betteraves parvenant, malgré l'existence des toits de protection, à pénétrer dans ces caniveaux. Il en résulte la nécessité de prévoir un système complexe de tuyauteries supplémentaires ainsi qu'une consommation plus importante en eau d'évacuation, cette eau devant par ailleurs être ensuite éliminée lors des traitements ultérieurs des betteraves.

La présente invention a pour objet une installation de stockage et de reprise automatique de betteraves ou autres produits en vrac qui permette une reprise par des moyens plus simples et plus efficaces tout en conservant les avanta-

3

0025522

ges du stockage à capacité extensible de ce type d'installation.

L'installation de stockage et de reprise automatique de
betteraves, tubercules ou produits en vrac de l'invention
comprend une aire de stockage étanche à l'eau présentant au
moins une portion de forme semi-circulaire. L'installation
comprend également des moyens automatiques d'amenée des betteraves susceptibles de se déplacer selon un parcours cyclique
au-dessus de l'aire de stockage et des moyens de reprise
automatique des produits en vrac ou des betteraves comprenant
des caniveaux d'évacuation par entraînement dans un écoulement
liquide. Les moyens de reprise sont adaptés pour pouvoir se
déplacer selon le même parcours cyclique que les moyens d'amenée des produits en vrac. Selon l'invention, la surface de
l'aire de stockage est inclinée de façon continue en direction
de la partie centrale et les caniveaux d'évacuation sont
disposés de manière sensiblement radiale dans ladite portion
de forme semi-circulaire. Il est ainsi possible de simplifier
considérablement la réalisation de l'aire de stockage qui ne
comporte plus de secteurs circulaires délimités par des sommets et comportant des zones basses, mais au contraire une
seule surface d'inclinaison continue, en direction du centre.
Une telle surface de pente constante, peut être aisément
réalisée par exemple en béton ou en tout autre revêtement
étanche à l'eau, et apte à supporter les produits en vrac à
stocker tels que les betteraves.

Par ailleurs, la disposition selon l'invention des caniveaux d'évacuation de façon sensiblement radiale permet d'obtenir, compte tenu du déplacement des moyens de reprise automatique, un nettoyage continuel de la partie basse des caniveaux d'évacuation. Autrement dit dans l'installation selon la
présente invention, la projection d'eau sous pression qui
permet la reprise automatique des produits en vrac tels que
les betteraves a également pour fonction supplémentaire de
réaliser continuellement le nettoyage de la portion basse de
chacun des caniveaux d'évacuation, avant que les produits en vrac ou les betteraves déplacés par l'eau projetée sous pression ne soient évacués par ces mêmes caniveaux. Il en résulte qu'il n'est plus nécessaire de prévoir de moyens de protection tels que les toits des installations de stockage de type connu et que l'on peut supprimer toute l'installation supplémentaire d'alimentation en eau qui était rendue nécessaire pour dégager les caniveaux d'évacuation des installations de type connu.

Selon l'invention, la portion de forme semi-circulaire de l'aire de stockage comporte avantageusement un puits central d'écoulement, les caniveaux pénétrant sensiblement tangentiellement à la périphérie dudit puits central. On constate que dans une telle disposition préférée, dans laquelle les caniveaux d'évacuation ne se trouvent donc pas strictement radiaux, l'effet de nettoyage de la partie basse des caniveaux d'évacuation est particulièrement efficace.

Lorsque l'aire de stockage présente un diamètre important, l'installation comporte en outre pour chaque caniveau d'évacuation sensiblement radial, au moins un caniveau secondaire s'étendant une direction sensiblement périphérique et relié auxdits canaux d'évacuation principaux. Ces caniveaux secondaires qui sont de préférence reliés à leur caniveau d'évacuation principal associé par l'intermédiaire d'une section courbe, présentent avantageusement une surface de fond inclinée en direction du caniveau d'évacuation principal dont le fond est par ailleurs incliné en direction des moyens d'extraction de produits que comporte l'installation.

L'invention sera mieux comprise à l'étude de deux modes de réalisation particuliers décrits à titre d'exemples nullement limitatifs et illustrés par les dessins annexés, sur lesquels :

la figure 1 est une vue schématique en élévation en coupe d'une installation de stockage et de reprise automatique de betteraves selon l'invention comportant une aire de stockage de forme circulaire;

la figure 2 est une vue de dessus de l'aire de stockage de l'installation de la figure 1 montrant la disposition des caniveaux d'évacuation et représentant schématiquement les moyens d'amenée et de reprise des betteraves; et

la figure 3 est une vue de desssus analogue à la figure 2 d'une installation de stockage et de reprise selon l'invention dans laquelle l'aire de stockage présente une forme dite en hippodrome.

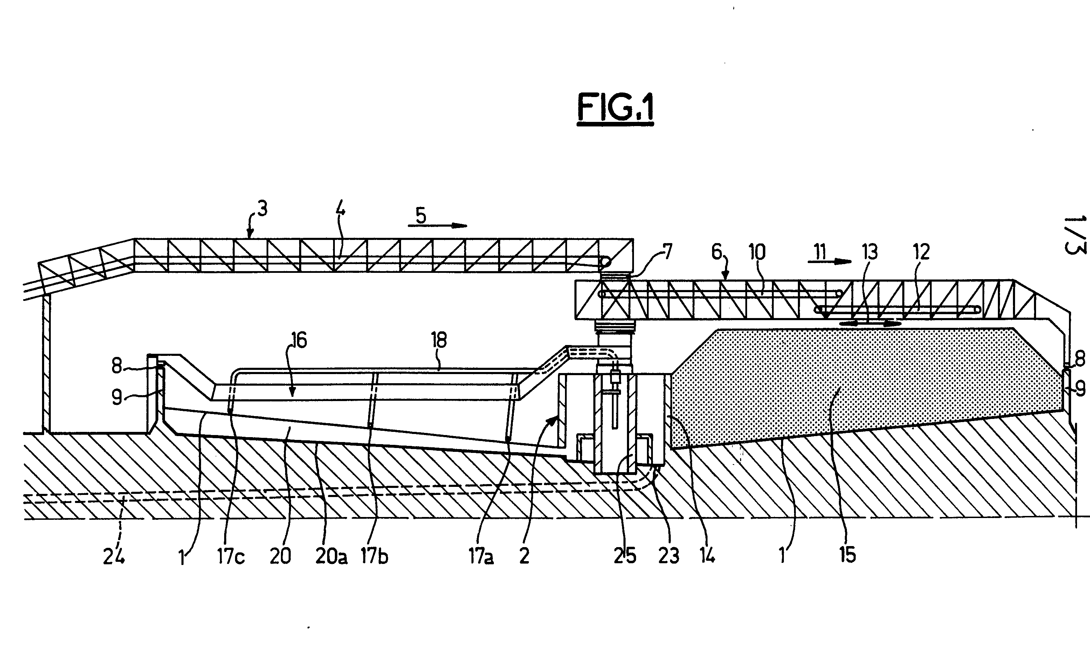

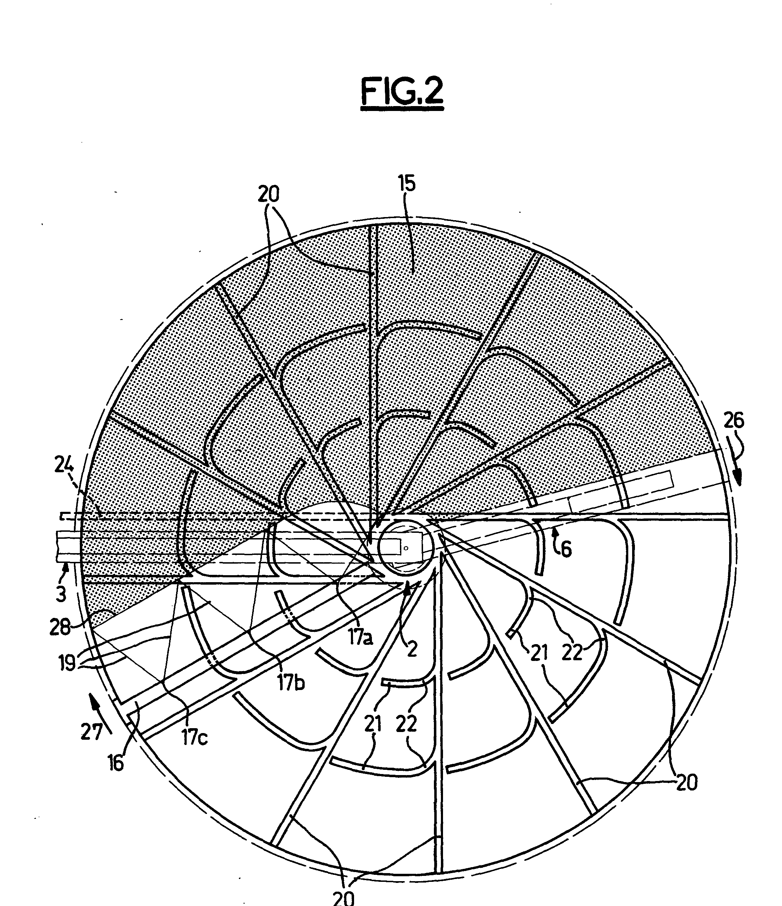

Tel qu'elle est représentée sur les figures 1 et 2, l'installation de stockage et de reprise automatique de l'invention, adaptée à titre d'exemple au stockage de betteraves en vrac, comprend une aire de stockage de forme circulaire dont la surface 1 est conique présentant une inclinaison vers une zone centrale comportant un puits central d'écoulement 2. Les betteraves sont amenées à l'aire de stockage par un transporteur fixe 3 dont la courroie mobile 4 se déplace dans le sens de la flèche 5 sur la figure 1. Les betteraves sont ainsi amenées jusque dans l'axe de l'aire de stockage où elles sont reprises par un portique transporteur 6 mobile autour de l'axe 7 qui est confondu avec l'axe de l'aire de stockage. Le portique 6 convenablement entraîné en rotation par des moyens non représentés sur la figure, est supporté par des moyens de roulement sur un rail de guidage ou analogue référencé 8 et disposé sur toute la périphérie d'une paroi extrême 9 délimitant la zone de stockage. Le portique 6 disposé radialement comporte un transporteur à bande sans fin 10 déplaçant les betteraves dans le sens de la flèche 11 jusque dans une zone sensiblement médiane du portique 6 où elles sont reprises par un deuxième transporteur 12 également à courroie sans fin, lequel peut se déplacer à l'intérieur même du portique 6 selon un mouvement de va-et-vient ou de navette schématisé par la double flèche 13. Les betteraves sont ainsi stockées en occupant le maximum de place disponible entre la paroi circulaire d'extrémité 9 de l'aire de stockage et la paroi 14 entourant le puits central 2. Le tas de betteraves est référencé 15 sur les figures et schématisé par un grisé.

L'installation comporte en outre un portique ou pont d'abattage radial 16 qui peut également être entraîné en rotation autour de l'axe 7 et qui est supporté comme le por-

tique 6 par les rails de guidage périphériques 8. Le pont d'abattage 16 est muni de trois lances 17a, 17b et 17c alimentées en eau sous pression par une canalisation 18 et qui sont continuellement animées d'un mouvement de balancier dont les deux positions extrêmes sont schématisées en 19 sur la figure 2. Les lances 17a, 17b et 17c sont disposées au voisinage immédiat de la surface inclinée 1 de l'aire de stockage et peuvent ainsi projeter de l'eau sous pression vers l'avant, comme on le voit sur la figure 2, en direction sensiblement tangentielle par rapport à la surface 1, et autour d'une direction moyenne sensiblement périphérique.

Plusieurs caniveaux d'évacuation 20 sont ménagés en creux dans la surface 1 de l'aire de stockage. Les caniveaux d'évacuation 20 sont rectilignes et leur surface de fond 20a est légèrement inclinée vers le puits central 2 dans lequel ils pénètrent sensiblement tangentiellement à sa périphérie comme on peut le voir sur la figure 2. La pente de la surface 1 de l'aire de stockage étant plus forte que celle du fond 20a des caniveaux d'évacuation 20, ces derniers présentent une profondeur plus importante dans la périphérie de l'aire de stockage que dans la zone centrale.

Deux caniveaux secondaires 21 sont reliés par des portions courbes 22 à chaque caniveau d'évacuation principal 20. Les caniveaux 21 s'étendent sur une direction générale périphérique, comme on peut le voir sur la figure 2, et présentent une surface de fond inclinée en direction des caniveaux 20.

La surface de fond 23 du puits central 2 est conformée en hélice et reliée à une canalisation d'extraction 24 du mélange d'eau et de betteraves entraînées. L'ensemble du mécanisme de commande et d'entraînement du mouvement du portique 6 et de ses différents organes ainsi que du pont d'abattage 16 muni de ses lances 17a, 17b et 17c se trouve disposé dans un logement 25 à l'intérieur du puits central 2.

On va maintenant expliquer le fonctionnement de l'installation à l'aide des figures 1 et 2.

Les betteraves alimentées par le transporteur d'amenée 3 sont déposées continuellement ou par intermittence sur la surface inclinée 1 de l'aire de stockage par le transporteur mobile 6 qui se déplace en rotation selon la flèche 26 de la figure 2. Toute la zone qui se trouve derrière le transporteur 6 est donc chargée en betteraves 15. On notera que les betteraves 15 recouvrent complètement la surface inclinée 1 et peuvent donc pénétrer à l'intérieur des différents caniveaux 20, 21 et 22 qu'elles obturent complètement.

Le pont d'abattage 16 se déplace dans le même sens que le transporteur mobile 6 c'est-à-dire dans le sens de la flèche 27 de la figure 2. Il est donc animé d'un mouvement de poursuite du portique 6, la capacité à un instant donné de l'installation de stockage étant représentée sur la figure 2, par le secteur circulaire grisé 15 se trouvant derrière le transporteur mobile 6 et devant le pont d'abattage 16. On voit que la capacité de stockage de l'installation est variable selon la position relative de ces deux éléments.

La zone d'action de l'eau sous pression projetée par les différentes lances 17a, 17b et 17c du pont d'abattage 16, est délimitée sur la figure 2 par le trait 28. On voit sur la figure 2 que la lance 17a située le plus près de l'axe de l'aire de stockage procède au nettoyage des portions basses des caniveaux d'évacuation principaux 20, portions qui se trouvent le plus près du puits central 2. Les betteraves qui sont alors entraînées par l'eau sous pression provenant des lances 17b et 17c se trouvant respectivement sensiblement dans la portion centrale et au voisinage de la périphérie, peuvent s'écouler sur la surface inclinée 1 de l'aire de stockage et être évacuées par les caniveaux principaux 20 et les caniveaux secondaires 21 qui ont été convenablement dégagés des betteraves qui les obturaient par l'eau sous pression provenant de la lance 17a. D'une manière générale on voit que grâce à la disposition des différents caniveaux d'évacuation de l'installation de l'invention, les betteraves qui sont entraînées par une lance sont évacuées par des caniveaux inclinés qui ont préalablement été nettoyés par la même lance et par les autres lances qui sont situées dans des zones plus centrales.

On notera également que par la disposition tangentielle des caniveaux principaux 20 par rapport au puits central 2 et grâce à la disposition radiale du pont d'abattage 16, un angle aigu est toujours maintenu entre les lances de projection 17a, 17b et 17c et les caniveaux d'évacuation 20, ce qui favorise l'opération de nettoyage. Cette disposition présente également l'avantage que les zones les plus basses des caniveaux d'évacuation 20 qui se trouvent au voisinage de la jonction avec le puits d'évacuation central 2 sont ainsi parfaitement dégagées par la lance 17a située le plus près de la zone centrale.

Grâce à cette disposition particulière on voit donc qu'il n'est plus nécessaire de prévoir aucun moyen de protection des caniveaux d'évacuation qui sont dégagés automatiquement par l'eau sous pression qui sert également à l'évacuation et à la reprise des betteraves par l'intermédiaire du puits central 2 et de la canalisation d'extraction 24.

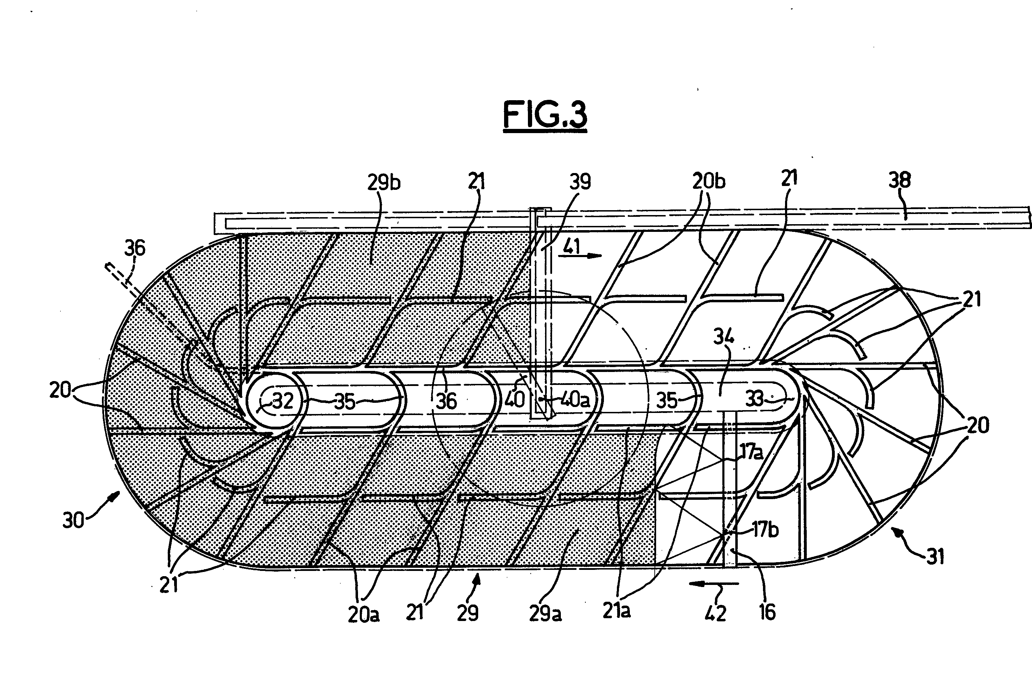

Le mode de réalisation illustré sur la figure 3, sur laquelle les organes identiques portent les mêmes références, ne diffère du mode de réalisation précédent que par la forme d'hippodrome allongé de l'aire de stockage. L'aire de stockage comprend ici une portion centrale sensiblement rectangulaire 29 et deux portions d'extrémité semi-circulaires 30 et 31. D'une manière générale, la forme et la disposition du fond et des caniveaux d'évacuation des portions d'extrémité semi-circulaires 30 et 31, est analogue à la disposition décrite en référence au mode de réalisation des figures 1 et 2. La surface de l'aire de stockage dans ces portions d'extrémité 30 et 31 est donc conique et dirigée vers les deux puits d'évacuation semi-circulaires 32 et 33 en position basse. Le fond des puits 32 et 33 est conformé en hélice la portion basse se trouvant du côté 29b de la portion centrale 29. Compte tenu du diamètre plus faible des portions semi-circulaires dans ce mode de réalisation, les caniveaux principaux d'évacuation 20 comportent seulement un caniveau secondaire 21. Comme dans le mode de réalisation précédent, les caniveaux principaux 20 pénètrent tangentiellement à la périphérie des puits d'évacuation 32 et 33.

Dans la portion centrale rectangulaire 29, la surface de l'aire de stockage est plane légèrement inclinée en direction de l'axe longitudinal de l'hippodrome. La zone centrale de reprise 34 de forme allongée est délimitée par les deux puits d'extrémité semi-circulaire 32 et 33.

Dans la portion centrale 29, les caniveaux d'évacuation 20a et 20b sont inclinés par rapport à l'axe longitudinal et parallèles entre eux des deux côtés dudit axe longitudinal. Le pont d'abattage 16 analogue à celui qui est représenté sur les figures 1 et 2, se déplace en translation parallèlement à l'axe longitudinal dans la portion centrale 29 et en rotation dans les deux portions d'extrémité 30 et 31. Lors de son déplacement, le pont d'abattage 16 forme un angle aigu avec les canaux d'évacuation 20a et 20b de la portion centrale 29 compte tenu de leur inclinaison par rapport à l'axe longitudinal de l'hippodrome.

Le pont d'abattage 16 comporte deux lances 17a, 17b animées d'un mouvement de balancier et projetant de l'eau sous pression comme précédemment vers l'avant sur la surface de l'aire de stockage de façon à dégager successivement les portions basses des caniveaux d'évacuation assurant ainsi à la fois une fonction de nettoyage des caniveaux et d'extraction des betteraves.

Les caniveaux 20a situés du côté 29a de la portion centrale 29 comportent un caniveau secondaire 21 situé sensiblement dans la zone médiane de la portion 29a et un deuxième caniveau secondaire 21a longeant la bordure de la zone centrale 34, tous ces caniveaux secondaires étant parallèles à l'axe longitudinal de l'hippodrome. L'eau et les betteraves provenant des caniveaux d'évacuation 20a et de leurs caniveaux secondaires respectifs 21 et 21a sont extraites par l'intermédiaire de portions courbes 35 inclinées en direction de la canalisation d'extraction générale 36 qui longe sur toute sa longueur l'autre bordure de la zone centrale 34. Pour faciliter l'évacuation le fond de la canalisation 36 est situé à un niveau inférieur à celui des caniveaux secondaires 21a. Sur l'autre côté 29b, les caniveaux 20b qui ne comportent qu'un seul caniveau secondaire 21 situé sensiblement dans la zone médiane de la portion 29b, sont directement reliés à la canalisation 36. La portion centrale 34 de l'aire de stockage comprend donc d'un côté la canalisation d'évacuation 36 et de l'autre une pluralité de caniveaux secondaires inclinés 21a indépendants les uns des autres.

Dans ce mode de réalisation, l'alimentation en betteraves se fait par le transporteur fixe 38 qui coopère avec un transporteur mobile 39 perpendiculaire au transporteur 38 et pouvant se déplacer en translation au-dessus de l'un des côtés 29b de la portion centrale 29. Le transporteur mobile 39 comportant une flèche 40 pivotant autour d'un axe 40a situé au voisinage de l'extrémité centrale du transporteur mobile 39.

L'ensemble fonctionne d'une manière générale comme dans le mode de réalisation précédent. Les betteraves amenées par le transporteur 38 et reprises par le transporteur mobile 39 sont distribuées sur le côté 29b de la portion centrale 29 entre des murs schématisés sur le dessin par une ligne en tirets, par la flèche pivotante 40 lorsque le transporteur mobile se déplace dans le sens de la flèche 41 d'une extrémité à l'autre de l'hippodrome. Lors de ce mouvement, la flèche 40 pivote autour de son axe d'un peu moins de 180° au-dessus du côté 29b de façon à répartir convenablement les betteraves sur ce côté.

Lorsque le transporteur mobile 39 est arrivé à l'une des extrémités semi-circulaires de l'hippodrome comportant le puits 33, la rotation de la flèche 40 autour de son axe permet de disposer des betteraves sur toute cette zone d'extrémité. Le transporteur mobile repart ensuite dans l'autre sens, à l'inverse de la flèche 41, la flèche 40 pivotant alors autour de son axe 40a de façon à rester au-dessus du côté 29a de la portion centrale 29 afin de décharger les betteraves sur l'aire correspondant à la portion 29a.

Le pont d'abattage 16 se déplace quant à lui toujours dans la direction de la flèche 42. Le mouvement de balancier des lances de projection 17a et 17b combiné au mouvement d'avance du pont d'abattage 16 permet donc le déplacement des

0025522

betteraves et leur évacuation dans un courant d'eau par les caniveaux 20a, 20b, 21 et 21a les portions courbes 35 et la canalisation d'extraction 36. Comme dans le mode de réalisation précédent, la disposition particulière des caniveaux 20 permet d'effectuer un nettoyage préalable de leurs parties basses afin qu'ils puissent ensuite évacuer convenablement les betteraves déplacées par le jet d'eau projeté par la lance se trouvant plus proche de la périphérie de l'hippodrome.

0025522

REVENDICATIONS

1. Installation de stockage et de reprise automatique de produits en vrac, tels que betteraves ou tubercules, comprenant une aire de stockage étanche à l'eau qui présente au moins une portion de forme semi-circulaire avec un puits central d'écoulement, la surface de cette aire de stockage étant inclinée de façon continue en direction de la partie centrale, des moyens automatiques d'amenée des produits en vrac susceptibles de se déplacer selon un parcours cyclique au-dessus de l'aire de stockage et des moyens de reprise automatique des produits en vrac comprenant des caniveaux d'évacuation par entraînement dans un écoulement liquide, ces caniveaux d'évacuation étant disposés de manière sensiblement radiale dans ladite portion de forme semi-circulaire et raccordés chacun par des sections courbes à des caniveaux secondaires, lesdits moyens de reprise pouvant se déplacer selon le même parcours cyclique que les moyens d'amenée, installation caractérisée par le fait que les caniveaux d'évacuation (20) pénètrent sensiblement tangentiellement à la périphérie dudit puits central (2).

2. Installation selon la revendication 1, caractérisée par le fait que les caniveaux secondaires (21) s'étendent selon une direction périphérique.

3. Installation selon la revendication 2, caractérisée par le fait que la surface de fond des caniveaux secondaires (21) est seule inclinée en direction du caniveau d'évacuation (20) correspondant.

4. Installation selon l'une quelconque des revendications précédentes, caractérisée par le fait que les caniveaux d'évacuation (20) ont une profondeur décroissante de la périphérie vers le puits central (2).

5. Installation selon l'une quelconque des revendications précédentes, caractérisée par le fait que la surface de fond du puits central (2) est conformée en hélice et reliée à une canalisation (24) d'extraction du mélange d'eau et de produits en vrac.

6. Installation selon l'une quelconque des revendications précédentes, comprenant une aire de stockage en forme d'hippodrome allongé muni de deux portions semi-circulaires d'extrémité, la surface de l'aire étant conique dans les deux portions d'extrémité et plane, inclinée vers l'axe longitudinal dans la portion centrale, une zone de reprise délimitée par deux puits semi-circulaires occupant la portion centrale, caractérisée par le fait que les caniveaux d'évacuation (20b) de la partie centrale sont inclinés par rapport à l'axe longitudinal et parallèles entre eux sur les deux côtés dudit axe, de façon à former un angle aigu avec le pont d'abattage, et que les caniveaux secondaires (21) y sont parallèles à l'axe longitudinal.

7. Installation selon la revendication 6, caractérisée par le fait que les caniveaux d'évacuation (20b) d'un côté de la partie centrale sont reliés par une portion inclinée courbe (35) à une canalisation d'évacuation.

# FIG.1

0025522

# FIG.2

# FIG.3

## DOCUMENTS CONSIDERES COMME PERTINENTS

| Catégorie | Citation du document avec indication, en cas de besoin, des parties pertinentes | Revendication concernée |
|---|---|---|
| | NL - A - 71 18075 (BAMMAN & SCHREIBER)<br><br>* Ensemble du brevet *<br><br>-- | 1,3,5 |
| | DE - A - 2 164 813 (OPPERMANN & DEICHMANN)<br><br>* Page 14, ligne 15 - page 16, ligne 6 et figures *<br><br>-- | 5,6 |
| | DE - B - 1 914 396 (GEBR. BUTFERING)<br><br>* Revendications 1,4,11 et figures *<br><br>-- | 1 |
| | NL - A - 71 17693 (BAMMANN & SCHREIBER)<br><br>* Ensemble du brevet *<br><br>---- | 2,5 |

**CLASSEMENT DE LA DEMANDE (Int. Cl. 3)**

B 65 G 65/28

**DOMAINES TECHNIQUES RECHERCHES (Int. Cl. 3)**

B 65 G

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 15-12-1980 | V. ROLLEGHEM |

OEB Form 1503.1   06.78